(19) Europäisches Patentamt
European Patent Office
Office européen des brevets

(11) **EP 1 468 201 B1**

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(21) Anmeldenummer: **02798276.8**

(22) Anmeldetag: **13.12.2002**

(51) Int Cl.:
**F16D 48/06** (2006.01)

(86) Internationale Anmeldenummer:
**PCT/DE2002/004569**

(87) Internationale Veröffentlichungsnummer:
**WO 2003/058085 (17.07.2003 Gazette 2003/29)**

(54) **KUPPLUNGSSTEUERSYSTEM**

CLUTCH CONTROL SYSTEM

SYSTEME DE COMMANDE D'EMBRAYAGE

(84) Benannte Vertragsstaaten:
**AT BE BG CH CY CZ DE DK EE ES FI FR GB GR IE IT LI LU MC NL PT SE SI SK TR**

(30) Priorität: **12.01.2002 GB 0200661**

(43) Veröffentlichungstag der Anmeldung:
**20.10.2004 Patentblatt 2004/43**

(73) Patentinhaber: **LuK Lamellen und Kupplungsbau Beteiligungs KG**
**77815 Bühl (DE)**

(72) Erfinder: **BOLL, Bernhard**
**82239 Alling (DE)**

(56) Entgegenhaltungen:
**WO-A-01/74619          DE-A- 10 009 860**
**US-A- 5 752 592**

**Beschreibung**

Die vorliegende Erfindung betrifft Kupplungssteuersysteme und insbesondere ein Kupplungssteuersystem für ein kontinuierlich veränderliches Getriebesystem, oder für ein automatisiertes, Handschalt-, halbautomatisches oder automatisches Getriebesystem.

Bei kontinuierlich veränderlichen Getriebesystemen ist eine Reibungskupplung zwischen dem Fahrzeugmotor und dem Getriebesystem vorgesehen, um einen Eingriff des kontinuierlich veränderlichen Getriebes aus dem Stillstand und eine Lösung des kontinuierlich veränderlichen Getriebes beim Anhalten zu ermöglichen. Ebenso sind in automatischen Getriebesystemen Reibungskupplungen zwischen dem Fahrzeugmotor und einem mehrstufigen Wechselgetriebe angeordnet, um ein Anfahren aus dem Stillstand und ein Schalten von einem Gangübersetzungsverhältnis in ein anderes zu ermöglichen. Bei kontinuierlich veränderlichen Getriebesystemen oder automatischen Getriebesystemen dieser Art wird vorzugsweise die Kupplung auch gesteuert, so dass das durch diese übertragene Drehmoment ein bestimmtes Maß über dem Motordrehmoment liegt. Auf diese Weise können abrupte Anstiege im Motordrehmoment gedämpft werden, da die Kupplung rutschen kann, wodurch Stöße in der Kraftübertragung vermieden werden.

Um ein sanftes Anfahren und reibungslose Gangwechsel zu ermöglichen und die Kupplung so zu steuern, dass das durch diese übertragene Drehmoment ein bestimmtes Maß über dem Motordrehmoment liegt, muss der Reibungskoeffizient der Kupplung aufgezeichnet werden, so dass Anpassungen vorgenommen werden können, um Schwankungen aufgrund der Betriebsbedingungen und des Verschleißes der Kupplung zu ermöglichen. Der Reibungskoeffizient der Kupplung kann durch Aufzeichnung des Ausmaßes des Schlupfes der Kupplung bestimmt werden, wenn auf diese beim Anfahren aus dem Stillstand ein Drehmoment ausgeübt wird. Des Weiteren können bei automatisierten Handschalt-, halbautomatischen und vollautomatischen Getrieben Anpassungen für den Reibungskoeffizient auch beim Wiedereingreifen der Kupplung nach einem Gangwechsel vorgenommen werden, wenn ebenso ein Schlupf der Kupplung auftritt. Ein solches Verfahren ist bekannt aus US-A-5 752 592.

Bei kontinuierlich veränderlichen Getriebesystemen jedoch, ist es nicht möglich, den Reibungskoeffizient unter solchen Umständen anzupassen, da die Kupplung für einen Wechsel des Gangübersetzungsverhältnisses nicht gelöst wird.

Gemäß der vorliegenden Erfindung umfasst ein Verfahren zum Steuern einer Kupplung, die ein Drehmoment zwischen einem Motor und einem Getriebesystem eines Motorfahrzeuges überträgt, das Einrücken der Kupplung auf derartige Weise, dass das durch diese übertragene Drehmoment ein bestimmtes Maß über dem Motordrehmoment liegt, und das Aufzeichnen des Ausmaßes des Schlupfes der Kupplung beim Lastwechsel, wenn sich das vom Motor übertragene Drehmoment rasch erhöht, wobei das Ausmaß des Schlupfes, das beim Lastwechsel auftritt, mit einer Modellzahl verglichen wird, die den idealen Schlupf für das absolute Drehmoment, den Drehmomentgradienten und die Motordrehzahl darstellt, sowie das Korrigieren des Reibungskoeffizienten der Kupplung, um den idealen Schlupf dem tatsächlichen Schlupf gleichzusetzen.

Das Verfahren der vorliegenden Erfindung ist insbesondere zur Anpassung des Reibungskoeffizienten von Kupplungen geeignet, die bei kontinuierlich veränderlichen Getriebesystemen verwendet werden, wodurch der Reibungskoeffizient angepasst werden kann, sobald es zu einem Lastwechsel kommt, und nicht nur beim Anfahren. Das Verfahren kann jedoch auch bei automatisierten Handschalt-, halbautomatischen oder vollautomatischen Getriebesystemen verwendet werden, um eine Anpassung des Reibungskoeffizienten während des Lastwechsels, wie auch beim Anfahren und während Gangwechsel zu ermöglichen.

Die Erfindung wird nun nur als Beispiel mit Bezugnahme auf die beiliegenden Zeichnungen beschrieben, von welchen:

Figur 1 schematisch ein kontinuierlich veränderliches Getriebesystem gemäß der vorliegenden Erfindung zeigt; und

Figur 2 eine typische Kurve des Motor- und Kupplungsdrehmoments für das in Fig. 1 dargestellte Getriebesystem ist.

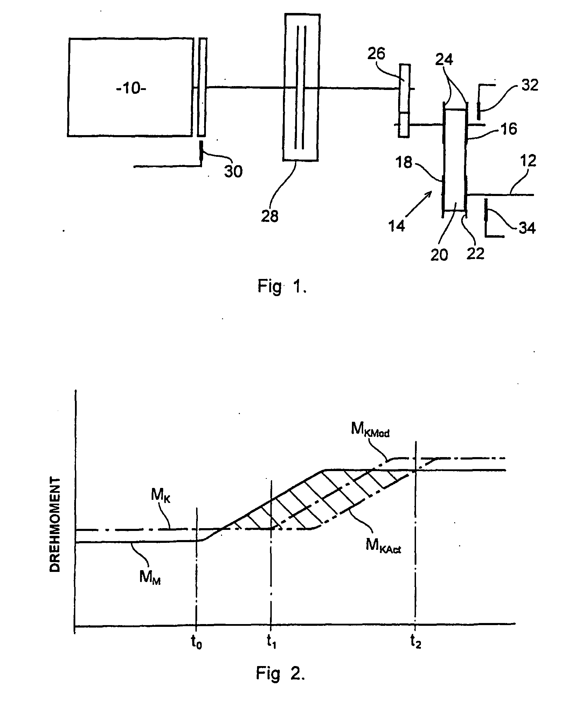

Wie in Fig. 1 dargestellt, umfasst ein typisches kontinuierlich veränderliches Getriebesystem, welches einen Fahrzeugmotor 10 mit einem Achsantrieb 12 verbindet, einen Riemenantrieb 14 mit einem Paar von Riemenscheiben 16, 18, zwischen welchen ein Riemen 20 läuft. Die Riemenscheiben 16 und 18 haben eine Kerbe 22 mit V-förmigem Querschnitt, die zwischen zwei konischen Platten 24 definiert ist, wobei die Platten 24 axial zueinander bewegbar sind, so dass der Radius, bei welchem der Riemen 20 mit der Kerbe 22 in Eingriff gelangt, verändert werden kann, um das Antriebsverhältnis zu ändern. Die Breite der Platten 24 der Riemenscheiben 16 und 18 sind so eingestellt, dass, wenn der Radius, bei dem der Riemen 20 mit einer der Riemenscheiben 16, 18 in Eingriff gelangt, abnimmt, der Radius, bei dem der Riemen mit der anderen Riemenscheibe 18, 16 in Eingriff gelangt, zunimmt, wodurch der Riemen 20 unter Spannung gehalten wird.

Eine Riemenscheibe 16 des Riemenantriebs 14 ist mit dem Motor durch einen Getriebezug 26 und eine Reibungskupplung 28 verbunden, während die andere Riemenscheibe 18 mit dem Achsantrieb 12 verbunden ist. Drehzahlsensoren 30, 32 und 34 sind zur Messung der Drehzahl des Motors 10, der Riemenscheibe 16 bzw. der Riemenscheibe 18 vorgesehen. Als Alternative können die Sensoren 32 und 34 durch einen Raddrehzahlsensor ersetzt werden, wie zum Beispiel für ein Fahrzeug-Antiblockiersystem verwendet wird, wobei die Drehzahl der Antriebsscheibe von der Kupplung 28 aus der Raddrehzahl errechnet wird, da das Antriebsverhältnis des Riemenantriebes 14 und des Getriebezuges 26 bekannt ist.

Bei dem zuvor offenbarten Getriebesystem wird die Kupplung 28 normalerweise gelöst, wenn das Fahrzeug stillsteht, während der Motor 10 läuft. Beim Anfahren aus dem Stillstand wird die Kupplung 28 automatisch gesteuert, um den Antrieb vom Motor 10 gesteuert aufzunehmen. Im Gegensatz dazu wird die Kupplung 28 beim Anhalten gelöst.

Während sich das Fahrzeug bewegt, wird die Kupplung 28 gesteuert, so dass sie ein Drehmoment $M_k$ übertragen kann, das in einem vorbestimmten Maß $\delta M$ über dem Motordrehmoment $M_m$ liegt, wie in Fig. 2 dargestellt. Wenn das Motordrehmoment $M_m$ rasch erhöht wird, kann auf diese Weise die Kupplung 28 rutschen, während sich das Drehmoment $M_k$, das von der Kupplung 28 übertragen wird, an das Motordrehmoment $M_m$ anpasst, wie in Fig. 2 dargestellt. Dadurch werden Stöße in der Kraftübertragung bei einem raschen Anstieg im Motordrehmoment $M_m$ gedämpft.

Das Drehmoment $M_k$, das von der Kupplung 28 übertragen wird, wird durch Steuern der Position eines Kupplungsbetätigungsmittels gesteuert, so dass ein richtiger Schub auf die Scheiben der Kupplung ausgeübt wird. Die richtige Position des Kupplungsbetätigungsmechanismus hängt von den Kupplungeigenschaften ab und ist eine Funktion des Motordrehmomentes, der Motordrehzahl und des Reibungskoeffizienten der Kupplung. Da das Motordrehmoment, die Motordrehzahl und der Reibungskoeffizient bekannt sind, kann folglich die richtige Kupplungsposition berechnet werden.

Während des Betriebes der Kupplung jedoch kann sich der Reibungskoeffizient aufgrund eines Verschleißes der Kupplungsscheiben und der Betriebsbedingungen, zum Beispiel der Temperatur der Kupplung, ändern. Es ist folglich notwendig, die Position des Kupplungsbetätigungsmechanismus zu korrigieren, um Schwankungen im Reibungskoeffizienten Rechnung zu tragen.

Wenn, wie in Fig. 2 dargestellt, der tatsächliche Reibungskoeffizient geringer als die Modellzahl ist, ist das Ausmaß des Schlupfes, der bei einem raschen Anstieg des Motordrehmomentes $M_m$ eintritt, höher als erwartet, und umgekehrt, wenn der Drehmomentkoeffizient höher ist, verringert sich das Ausmaß des auftretenden Schlupfes. Es ist folglich möglich, Schwankungen im Reibungskoeffizient zu korrigieren, wenn die Kupplung 28 rutscht, indem der tatsächliche Schlupf mit einem idealen Schlupf verglichen wird, der auf dem absoluten Drehmoment, dem Drehmomentgradienten und der Motordrehzahl beruht. Bei automatisierten Getriebesystemen mit einem mehrstufigen Wechselgetriebe, kann dies auch beim Anfahren aus dem Stillstand oder bei Gangwechseln, während sich das Fahrzeug bewegt, erfolgen. Bei einem kontinuierlich veränderlichen Getriebesystem gibt es natürlich keine Gelegenheit, solche Korrekturen bei Gangwechseln vorzunehmen.

Gemäß der vorliegenden Erfindung können Korrekturen des Reibungskoeffizienten auch während des Lastwechsels vorgenommen werden, wenn die Kupplung rutschen kann, während das Motordrehmoment rasch ansteigt. Obwohl dies besonders für kontinuierlich veränderliche Getriebesysteme geeignet ist, trifft es auch auf automatisierte Getriebesysteme mit mehrstufigem Wechselgetriebe zu.

Wenn, wie in Fig. 2 dargestellt, ein Fahrzeug mit einer im Wesentlichen konstanten Geschwindigkeit fährt, ist die Kupplung in einem ausreichenden Maße eingerückt, so dass das Kupplungsdrehmoment $M_k$ mit einem vorbestimmten Maß $\delta M$ über dem Motordrehmoment $M_m$ liegt. Wenn die Fahrzeugdrosselklappe nun zum Zeitpunkt $t_0$ offen ist, um das Motordrehmoment $M_m$ rasch zu erhöhen, kommt es zu einer Verzögerung, bevor Maßnahmen ergriffen werden können, um die Kupplung zur Erhöhung des Kupplungsdrehmomentes $M_k$ einzustellen. Das Kupplungsdrehmoment $M_k$ hinkt folglich hinter dem Motordrehmoment $M_m$ nach. Das überschüssige Motordrehmoment $M_m - M_k$ bedingt eine Beschleunigung des Motors, somit steigt die Motordrehzahl über die Drehzahl einer Kupplungsmitnehmerscheibe, und die Kupplungsscheiben rutschen, wie durch die schraffierte Fläche von Fig. 2 dargestellt ist.

Wenn die Kupplung rutscht:

$$J_m\dot{\omega}_m = M_k - M_m$$

wobei $J_m$ das Trägheitsmoment des Motors ist,

$\dot{\omega}_m$ die Beschleunigungsrate des Motors ist,

$M_m$ das Motordrehmoment ist; und

$M_k$ das Kupplungsdrehmoment ist.

Das Kupplungsdrehmoment $M_k$ für eine bestimmte Kupplung ist eine Funktion der Position eines Kupplungsbetätigungsmechanismus und des Reibungskoeffizienten der Kupplungsscheiben. Daher ist es möglich, unter der Annahme eines nominalen Reibungskoeffizienten, ein dynamisches Modell zu konstruieren, aus dem das Idealmaß des Schlupfes aus dem absoluten Drehmoment, dem Drehmomentgradienten und der Motordrehzahl berechnet werden kann. Der berechnete, ideale Schlupf kann mit dem tatsächlichen Schlupf verglichen werden, der unter Verwendung der Drehzahl des Motors, $\omega_m$, und Subtrahieren der Drehzahl $\omega_k$ der Kupplungsabtriebswelle, die von den Sensoren 30 und 32 erfasst wird, gemessen werden kann.

Wenn sich der tatsächliche Schlupf $S_{Act}$ von dem idealen Schlupf $S_{Mod}$ unterscheidet, kann der Reibungskoeffizient entsprechend eingestellt werden.

Unter Betrachtung von Fig. 2:

zum Zeitpunkt $t_0$

$$\omega_m = \omega_k$$

unter der Annahme, dass das Kupplungsdrehmoment $M_k$ konstant bleibt, hat sich die Drehzahl des Motors, $\dot{\omega}_M$, zum Zeitpunkt $t_1$ wie folgt erhöht:

$$\dot{\omega}_M \, \delta t \; = \; \delta t/J_m \, (M_m - M_K)$$

Daher ist die neue Motordrehzahl $\qquad = \omega_m + \delta t/J_m \, (M_m - M_K)$
Die angetriebene Drehzahl der Kupplung $\quad = \omega_m$
Daher ist das Schlupf $\qquad\qquad = \delta t/J_m \, (M_m - M_K)$

Daher ist der Unterschied zwischen dem Modell- und tatsächlichen Schlupf:

$$S_{Mod} - S_{Act} = \delta S = \delta t/J_m \, \{(M_m - M_{KMod}) - (M_m - M_{KAct})\}$$

$$= \delta t/J_m \, (M_{KAct} - M_{KMod})$$

$$= \int(M_{KAct} - M_{KMod})$$

Wobei

$M_{KMod}$ = Modellkupplungsdrehmoment
$M_{KAct}$ = tatsächliches Kupplungsdrehmoment

Für eine bestimmte Position der Kupplung ist $M_K$ jedoch eine Funktion des Reibungskoeffizienten $\mu$.

Daher

$$\delta S = \int(\mu_{Act} - \mu_{Mod})$$

$$\mu_{Act} - \mu_{Mod} = \int \delta S$$

Daher kann der Reibungskoeffizient abhängig von dem Unterschied $\delta S$ zwischen dem idealen Schlupf und dem tatsächlichen Schlupf angepasst werden.

Die obengenannte Annahme, dass das Kupplungsdrehmoment konstant bleibt, hält jedoch nur während der Verzögerung bei der Betätigung der Kupplung nach einer Erhöhung des Motordrehmomentes. Zur Berücksichtigung der Änderung im Kupplungsdrehmoment ist es notwendig, das Ausmaß des Schlupfes über einen Zeitraum zu integrieren. Zum Beispiel von $t_0$ bis $t_2$, wenn der Motor und die Kupplungsabtriebswelle wieder zu einer Synchronisierung kommen.

Es kann jedoch eine kürzere Zeitperiode, während die Kupplung rutscht, verwendet werden.

Zur Vermeidung von Übergangswirkungen wird eine Korrektur des Reibungskoeffizienten nur vorgenommen, wenn sich der tatsächliche Schlupf vom idealen Schlupf um mehr als einen vorbestimmten Wert unterscheidet.

Korrekturen des Reibungskoeffizienten können auf der Basis eines entsprechenden Algorithmus oder durch Nachschlagtabellen vorgenommen werden, die in der Software des Steuersystems enthalten sind.

Als Alternative, wenn der Unterschied δS zwischen dem tatsächlichen Schlupf und dem idealen Schlupf über dem Schwellenwert liegt, kann der Reibungskoeffizient um ein Inkrement, zum Beispiel 1 %, erhöht werden, wenn der tatsächliche Schlupf geringer als der ideale Schlupf ist, oder um ein Inkrement, zum Beispiel 1 %, gesenkt werden, wenn der tatsächliche Schlupf höher als der ideale Schlupf ist. Korrekturen des Reibungskoeffizienten können auf diese Weise vorgenommen werden, bis der Unterschied in der Schlupfdrehzahl δS unter dem Schwellenwert liegt.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnungen offenbarte Merkmalskombination zu beanspruchen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Die Ausführungsbeispiele sind nicht als Einschränkung der Erfindung zu verstehen. Vielmehr sind im Rahmen der vorliegenden Offenbarung zahlreiche Abänderungen und Modifikationen möglich.

**Patentansprüche**

1. Verfahren zum Steuern einer Kupplung, die ein Drehmoment zwischen einem Motor und einem Getriebesystem eines Motorfahrzeuges überträgt, umfassend das Einrücken der Kupplung auf derartige Weise, dass das durch diese übertragene Drehmoment ein bestimmtes Maß über dem Motordrehmoment liegt, und das Aufzeichnen des Ausmaßes des Schlupfes der Kupplung beim Lastwechsel, wenn sich das vom Motor übertragene Drehmoment rasch erhöht, wobei das Ausmaß des Schlupfes, das beim Lastwechsel auftritt, mit einer Modellzahl verglichen wird, die den idealen Schlupf für das absolute Drehmoment, den Drehmomentgradienten und die Motordrehzahl darstellt, sowie das Korrigieren des Reibungskoeffizienten der Kupplung, um den idealen Schlupf dem tatsächlichen Schlupf gleichzusetzen.

2. Verfahren nach Anspruch 1, wobei der Reibungskoeffizient als Funktion des Unterschiedes zwischen dem Modellschlupf und dem tatsächlichen Schlupf unter Verwendung eines geeigneten Algorithmus korrigiert wird.

3. Verfahren nach Anspruch 1, wobei der Reibungskoeffizient mit Hilfe von Nachschlagtabellen korrigiert wird, die in einer Software gespeichert sind, die in einem Kupplungssteuersystem für die Kupplung programmiert ist.

4. Verfahren nach Anspruch 1, wobei der Reibungskoeffizient inkremental korrigiert wird.

5. Verfahren nach einem der vorangehenden Ansprüche, wobei der Reibungskoeffizient nur korrigiert wird, wenn der Unterschied zwischen dem Modellschlupf und dem tatsächlichen Schlupf über einem vorbestimmten Schwellenwert liegt.

6. Verfahren nach einem der vorangehenden Ansprüche, wobei der tatsächliche Schlupf durch Drehzahlsensoren gemessen wird, wobei die Drehzahlsensoren die Motordrehzahl und die Drehzahl der Kupplungsmitnehmerscheibe messen.

7. Verfahren nach Anspruch 6, wobei die Drehzahl der Kupplungsmitnehmerscheibe aus einem Maß der Drehzahl eines angetriebenen Rades des Fahrzeuges berechnet wird.

## Claims

1. A method for controlling a clutch which transmits a torque between an engine and a transmission system of a motor vehicle, comprising engagement of the clutch in such a way that the torque transmitted by the clutch exceeds the engine torque by a certain amount, and recording of the amount of slippage of the clutch as the throttle setting is changed, when the torque transmitted from the engine suddenly increases, where the amount of slippage that occurs as the throttle setting is changed is compared to a model number that represents the ideal slippage for the absolute torque, the torque gradient and the engine speed, as well as correcting the coefficient of friction of the clutch to set the ideal slippage equal to the actual slippage.

2. A method according to Claim 1, wherein the coefficient of friction is corrected as a function of the difference between the model slippage and the actual slippage using a suitable algorithm.

3. A method according to Claim 1, wherein the coefficient of friction is corrected with the help of reference tables that are stored in software which is programmed in a clutch control system for the clutch.

4. A method according to Claim 1, wherein the coefficient of friction is incrementally corrected.

5. A method according to one of the preceding claims, wherein the coefficient of friction is only corrected if the difference between the model slippage and the actual slippage is greater than a predefined threshold value.

6. A method according to one of the preceding claims, wherein the actual slippage is measured by rotational speed sensors, where the rotational speed sensors measure the engine speed and the speed of the clutch disk.

7. A method according to Claim 6, wherein the speed of the clutch disk is calculated from a measurement of the speed of rotation of a driven wheel of the vehicle.

## Revendications

1. Procédé de commande d'un embrayage qui transmet un couple entre un moteur et un système de boîte de vitesses d'un véhicule motorisé, comprenant l'enclenchement de l'embrayage, de telle manière que le couple transmis par l'embrayage dépasse le couple-moteur d'une certaine valeur, et l'enregistrement de l'étendue du patinage de l'embrayage lors du changement de charge, lorsque le couple transmis par le moteur augmente rapidement, l'étendue du patinage qui se produit lors du changement de charge étant comparée à une valeur de référence qui représente le patinage idéal pour le couple absolu, le gradient du couple et la vitesse du moteur, ainsi que la correction du coefficient de friction de l'embrayage afin d'égaler le patinage idéal et le patinage effectif.

2. Procédé selon la revendication 1, le coefficient de friction étant corrigé en tant que fonction de la différence entre le patinage modèle et le patinage effectif en utilisant un algorithme approprié.

3. Procédé selon la revendication 1, le coefficient de friction étant corrigé à l'aide de tables de recherche qui sont mémorisées dans un logiciel lui-même programmé pour l'embrayage dans un système de commande d'embrayage.

4. Procédé selon la revendication 1, le coefficient de friction étant corrigé de manière incrémentale.

5. Procédé selon l'une quelconque des revendications précédentes, le coefficient de friction étant seulement corrigé lorsque la différence entre le patinage modèle et le patinage effectif est située au-delà d'une valeur de seuil prédéfinie.

6. Procédé selon l'une quelconque des revendications précédentes, le patinage effectif étant mesuré par des capteurs de vitesse, les capteurs de vitesse mesurant la vitesse du moteur et la vitesse du plateau d'appui d'embrayage.

7. Procédé selon la revendication 6, la vitesse du plateau d'appui d'embrayage étant calculée à partir d'une mesure de la vitesse d'une roue entraînée du véhicule.

Fig 1.

Fig 2.